# EUROPEAN PATENT APPLICATION

(11) **EP 4 813 805 A1**
(43) Date of publication of application: **30.09.2026**
(21) Application number: 26167862.7
(22) Date of filing: 26.03.2026
(51) Int. Cl.: B62D 5/04, B62D 3/02

(54) **STEERING SYSTEM AND TRANSMISSION DEVICE FOR A STEERING SYSTEM**

(30) Priority: 28.03.2025 LU 600848
(71) Applicant: Nabtesco Corporation, Tokyo 102-0093 (JP)
(72) Inventor: Thorn, Tobias, 56370 Dörsdorf (DE)
(74) Representative: Hoffmann, Jürgen

(57) **Abstract**

The invention relates to a steering system (1) comprising an electric motor (2) and a steering gear device (3), which has a first steering gear input shaft (4) that is couplable to a steering shaft, a second steering gear input shaft (5) that is drivably coupled to the electric motor (2), and a steering gear output shaft (6), wherein the torque path from the first steering gear input shaft (4) to the steering gear output shaft (6) comprises at least two gear stages connected in series, and wherein a first of the gear stages is formed by a cycloidal gear (21) comprising at least one externally toothed cycloidal disc (23, 24) which is in engagement with roller pins (25) arranged along a circumferential circle, wherein movement of the cycloidal disc (23, 24) is generated by a plurality of eccentrically arranged eccentric shafts (26) driven to rotate, each of which is rotatably supported about its own axis. The steering system (1) is characterized in that each eccentric shaft (26) has an eccentric shaft gear (28), which is a component of a second gear stage of the at least two gear stages connected drivably in series.

## Description

The invention relates to a steering system comprising an electric motor and a steering gear device, which has a first steering gear input shaft that is couplable to a steering shaft, a second steering gear input shaft that is drivably coupled to the electric motor, and a steering gear output shaft, wherein the torque path from the first steering gear input shaft to the steering gear output shaft comprises at least two drivably connected gear stages, and wherein a first of the gear stages is formed by a cycloidal gear which has at least one externally toothed cycloidal disc which is in engagement with roller pins arranged along a circumferential circle, wherein movement of the cycloidal disc is generated by a plurality of eccentrically arranged eccentric shafts driven to rotate, each of which is rotatably supported about its own axis.

The invention also relates to a transmission device for a steering system.

A power steering system is known from DE 20 2014 101 670 U1. The power steering system has a steering wheel shaft on which a first worm screw and a worm wheel are arranged coaxially. The power steering system further has an auxiliary force shaft on which a second worm screw meshing with the worm wheel is arranged coaxially. The power steering system additionally has a segment shaft with a gear segment which meshes with the first worm screw.

A steering gear for an electromechanical steering system for a vehicle is known from DE 10 2019 127 965 A1. The steering gear has an input shaft couplable or coupled to a steering column of the steering system, a segment shaft couplable or coupled to a pitman arm of the steering system, an angular gear, a servo gear, and an electric motor for driving the servo gear. The angular gear is configured as a bevel gear. The input shaft and the electric motor are connected to the servo gear. The servo gear is connected to the angular gear. The angular gear is connected to the segment shaft. The angular gear is configured to transmit torque from the servo gear to the segment shaft via two transmission paths.

A power steering system of a non-track-bound motor vehicle configured as a recirculating ball steering system is known from DE 102 34 596 B3. To increase the variability of the recirculating ball steering system, a servo motor configured as an electric motor is arranged at a steering gear input to reduce steering hand forces.

A commercial vehicle steering system is known from DE 102015217045 A1, which comprises a steering gear for transmitting a manual torque applied at a steering wheel to a pitman arm. The steering gear has an electric motor for providing an auxiliary torque for steering assistance, wherein the steering assistance is provided exclusively electrically over the entire operating range of the steering system. The steering gear further has an input shaft and an output shaft whose axes of rotation are skewed relative to one another. The steering gear further has a first gear device which couples the input shaft to the output shaft, and a second gear device to which the electric motor is connected on the input side. The second gear device is coupled on the output side to the output shaft, and a reduction gear stage of the gear device is arranged coaxially with the output shaft.

It is therefore the object of the present invention to provide a steering system of the type mentioned above, in which a particularly reliable and space-saving coupling of the first steering gear input shaft is possible.

This object is solved by a steering system characterized in that each eccentric shaft has an eccentric shaft gear which is a component of a second gear stage of the at least two gear stages connected drivably in series.

The steering system according to the invention is particularly compact in the axial direction. In addition, the steering system according to the invention can be adapted particularly well to the installation situation in a commercial vehicle and the available installation space.

In an advantageous embodiment, each eccentric shaft gear has a toothing, in particular an external toothing, which meshes with the toothing of an intermediate gear, which is also a component of the second gear stage of the at least two gear stages drivably connected in series.

The intermediate gear is preferably configured as a ring gear, which has an internal toothing that is in meshing engagement with the external toothing of the eccentric shaft gears. In this way, an advantageous reduction ratio of the second gear stage can be achieved in a compact and space-saving manner. The internal toothing may be configured as straight toothing or as helical toothing.

As an alternative to internal gearing, the intermediate gear, in particular in addition to an external gearing that is part of a third gear stage, may have an external gearing that is in meshing engagement with the gearings of the eccentric shaft gears.

The second gear stage can be a preceding stage directly upstream of the cycloidal gear, whereby the eccentric shaft gears are components of this preceding stage. In particular, as will be explained in more detail below, advantageously two preceding stages can be located directly upstream of the cycloidal gear, whereby the second gear stage forms the first of these two preceding stages.

Cycloidal gears can advantageously have a reduction ratio in the range of 1:30 to 1:80, particularly in the range of 1:30 to 1:50, and especially 1:40.

In an advantageous embodiment, the intermediate gear is additionally a component of a third gear stage. In particular, it may be advantageous to provide that the first steering gear input shaft is coupled directly to the third gear stage, with the second gear stage being connected downstream of the third gear stage drivably, and the first gear stage being connected downstream of the second gear stage. Alternatively or additionally, it may be advantageous to provide in general that the torque path runs from the steering gear input shaft to the third gear stage and from the third gear stage to the second gear stage and from the second gear stage to the first gear stage.

The steering gear output shaft is preferably coupled directly to the first gear stage.

It has been recognized that the reduction ratio from the first steering gear input shaft, which is connected to a steering handle of a commercial vehicle in a rotationally fixed manner and without further over- or under-ratio, to the steering gear output shaft is advantageously in the range of 1:22 to 1:26, preferably 1:24, so that the ratio between the steering angle at the steering wheel and the steering movement at the wheel corresponds to what drivers are usually accustomed to. At the same time, with regard to the connection of the motor, it should be noted that, due to the very high torque required at the steering gear output shaft, for example 8,000 Nm, a very high reduction ratio, for example in the range of 1:900 to 1:1,500, in particular 1:1,000, must be achieved in the torque path from the motor to the steering gear output shaft in order to avoid the use of an excessively large motor. In this respect, the first gear stage, which preferably comprises the steering gear output shaft or is directly coupled to the steering gear output shaft, must advantageously have as large a reduction ratio as possible. Since the first gear stage, which comprises the steering gear output shaft or is directly coupled to the steering gear output shaft, is also located in the torque path from the first steering gear input shaft to the steering gear output shaft, special boundary conditions arise for the reduction ratio of the gear stage, which (alone or with at least one further gear stage) is drivably upstream of this torque path of the first gear stage. It has been shown that the required reduction ratio of this gear stage can be achieved with a very compact design and, at the same time, by implementing an arrangement of the first steering gear input shaft relative to the steering gear output shaft that is advantageous in terms of the installation situation and the utilization of installation space in a commercial vehicle, by configuring the gear stage as a crossed helical gear. Alternatively, this gear stage can be configured as a worm gear or an angular gear.

The third gear stage can advantageously be configured as a worm gear. In such an embodiment, the intermediate gear, in particular on its outer circumference, can have a worm gear toothing that is in operative engagement with the worm of the worm gear. The worm can be arranged coaxially with the first steering gear input shaft and connected to it in a rotationally fixed manner.

In a particularly advantageous embodiment, the third gear stage is configured as a crossed helical gear. This embodiment allows for a very compact construction and, at the same time, the realization of an advantageous reduction ratio. In addition, this embodiment allows the first steering gear input shaft and the steering gear output shaft to be arranged at an angle to each other in a very compact design and with a reduction ratio that is advantageous for the steering system, which is particularly advantageous in terms of the installation situation and the use of space in a commercial vehicle.

A crossed helical gear is to be understood as a gear having two helically toothed gears which are in direct meshing engagement with one another and whose axes of rotation are skewed relative to one another. In particular, the axis of rotation of one of the gears may lie in a plane whose surface normal vector is parallel to the axis of rotation of the other gear. It may advantageously be provided that the following applies to both helically toothed gears: L < D π sin β, wherein L is the axial length of the gear, D is the root circle diameter of the helical toothing, π is the mathematical constant pi, and β is the helix angle.

In particular, it may be advantageous for the crossed helical gear to have a first helical gear that meshes with a second helical gear, one of the helical gears being formed by the intermediate gear. The intermediate gear may have the helical toothing, in particular on its outer circumference. Such an embodiment is particularly compact, especially because the intermediate gear fulfills a dual function in this embodiment.

Alternatively, the third gear stage can be configured as an angular gear. In this case, the intermediate gear can comprise a bevel gear toothing that is in meshing engagement with a further bevel gear toothing on a bevel gear which is arranged coaxially with the first steering gear input shaft and is connected to it in a rotationally fixed manner.

In general, it can be advantageous to design the steering gear input shaft so that it is directly coupled to the third gear stage. This enables a particularly compact and reliable design.

In a particularly compact and robust embodiment, the second gear stage has a step-up ratio, preferably in the range from 3:1 to 10:1, while the third gear stage has a reduction ratio in the range from 1:1 to 1:5, 5 to 1:5 in order to achieve the above-mentioned reduction ratio of 1:22 to 1:26, preferably 1:24, in a compact and space-saving manner in the torque path from the first steering gear input shaft to the steering gear output shaft.

In an embodiment in which the intermediate gear is configured as a ring gear having an internal toothing that is in meshing engagement with the external toothing of the eccentric shaft gears, the second gear stage can advantageously have a step-up ratio in the range of 5:1 to 10:1, in particular 7.2:1, while the third gear stage has a reduction ratio in the range of 1:2.5 to 1:5, in particular 1:3.7, in order to achieve the above-mentioned reduction ratio of 1:22 to 1:26, preferably 1:24, in a compact and space-saving manner in the torque path from the first steering gear input shaft to the steering gear output shaft.

In an embodiment in which the intermediate gear (in particular in addition to a further external toothing that are part of the third gear stage) has an external toothing that is in meshing engagement with the external toothing of the eccentric shaft gears, the further gear stage can advantageously have a step-up ratio in the range of 3:1 to 7:1, in particular 4.9:1, while the third gear stage has a reduction ratio in the range of 1:1.5 to 1:4.5, in particular 1:2.6, in order to achieve the above-mentioned reduction ratio of 1:22 to 1:26, preferably 1:24, in a compact and space-saving manner in the torque path from the first steering gear input shaft to the steering gear output shaft.

In a particularly advantageous embodiment, each eccentric shaft has an additional eccentric shaft gear. The additional eccentric shaft gears can advantageously be components of a second preceding stage of the cycloidal gear. In particular, it can be advantageous to provide that the second preceding stage and the cycloidal gear together form an RV gear.

An RV gear is a gearbox that includes a cycloidal gear and a preceding stage. The cycloidal gear includes at least one cycloidal disc with cycloidal external toothing that engages with roller pins arranged along a circumferential circle. The movement of the cycloidal disc is generated by several eccentric shafts, which are arranged eccentrically and are each mounted so that they can rotate about themselves. Each eccentric shaft carries a gear wheel with an external toothing, which is in meshing engagement with a centrally arranged drive gear. The gear wheels of the eccentric shafts and the drive gear are components of the preceding stage. The drive gear transmits its rotary motion to the gears of the eccentric shafts, causing the eccentric shafts to drive the cycloidal disc in a wobbling motion in which the cycloidal disc rolls along the circumference of the roller pins.

In particular, the motor can be advantageously coupled directly or indirectly to the cycloidal gear via the second preceding stage. This preceding stage can advantageously have a reduction ratio in the range of 1:2.5 to 1:5.

In particular, the motor can be advantageously coupled directly or indirectly to the cycloidal gear via the second preceding stage.

In a compact, robust, and reliable embodiment, each additional eccentric shaft gear meshes with a centrally located and rotatably mounted drive gear. The drive gear and the additional eccentric shaft gears can form the second preceding stage immediately upstream of the cycloidal gear or at least be components of the second preceding stage.

The drive gear can advantageously be arranged coaxially with the second steering gear input shaft and connected to it in a rotationally fixed manner. It is also possible for the steering gear input shaft and the drive gear to be manufactured together in one piece from the same piece of raw material.

In a particularly compact and robust embodiment, the eccentric shaft gear and the other eccentric shaft gear of each eccentric shaft are arranged on different sides of the at least one cycloidal disc. However, it is also possible for the eccentric shaft gear and the other eccentric shaft gear of each eccentric shaft to be arranged on the same side of the at least one cycloidal disc.

In an advantageous embodiment of the steering system, the electric motor is coupled to the second steering gear input by means of a transmission gear device. This allows the speed and torque of the motor to be adapted to the requirements of the steering system.

A particularly advantageous embodiment is one in which the transmission gear device is configured as a traction mechanism gear or comprises such a gear. A traction mechanism gear, for example in the form of a toothed belt or chain gear, enables low-noise and low-vibration power transmission. In addition, a traction mechanism gear allows the electric motor to be positioned relative to the steering gear device in a way that is particularly advantageous for utilizing the available installation space in a vehicle.

Alternatively, the transmission gear device can be configured as a spur gear or have one. In order to achieve an advantageous transmission ratio with a compact design, the spur gear can advantageously have three spur gears.

Another advantageous embodiment provides for the transmission gear device to be designed as a strain wave gear or to feature such a gear. A strain wave gear also enables an extremely compact design and offers particularly high steering precision due to its backlash-free power transmission.

In particular, the steering system can be configured, for example by means of the special embodiments of the transmission gear device described above, in such a way that the motor is offset, in particular axis-parallel to the second gear stage and/or axis-parallel to the steering gear output shaft. This arrangement enables a space-saving design and allows flexible integration of the motor into the installation space of the vehicle.

Alternatively, the steering system can be designed in an embodiment such that the motor is arranged coaxially with the second gear stage. This embodiment ensures direct and low-loss power transmission, thereby increasing the efficiency of the system. In addition, this results in a compact unit, particularly in the radial direction, which facilitates easy installation and maintenance.

Preferably, the steering gear device has a steering gear device housing which encloses at least the cycloidal gear. In particular, it may be advantageous for the steering gear device housing to also enclose at least one of the other gear stages, in particular all gear stages, and/or other steering system components. For example, the steering gear device housing may advantageously also enclose the transmission gear device.

Preferably, the steering gear device housing has fastening elements for fastening the steering gear device housing to a higher-level structure, in particular a vehicle body. The fastening elements of the steering gear device housing can, for example, be configured as apertures or as threaded holes for fastening screws.

In a particularly advantageous embodiment, the steering gear device housing is configured in such a way that, with this housing, a steering system that is mirror-symmetrical relative to the steering system with respect to a mirror plane, in particular a vertical mirror plane, at least with regard to the arrangement and orientation of the first and second steering gear input shafts, the steering gear output shaft, and the fastening elements, can be manufactured. Such a steering system offers the possibility of easily implementing a mirror-symmetrical steering system using identical parts, which simplifies adaptation to different vehicle variants, in particular for left-hand and right-hand drive vehicles, without the need for costly redesigns. This leads to more efficient production and reduces both development and manufacturing costs.

In general, the steering system components can be advantageously configured in such a way that with this steering system components, a steering system that is mirror-symmetrical relative to the steering system with respect to a mirror plane, in particular a vertical mirror plane, at least with regard to the arrangement and orientation of the first and second steering gear input shafts, the steering gear output shaft, and the fastening elements, can be manufactured. A particular advantage of this embodiment is the possibility of using identical parts. Since all steering system components are designed so that they can be used in a mirror-symmetrical manner, there is no need for different components for left-hand and right-hand drive vehicles. This leads to a reduction in the number of variants, which significantly lowers both production and logistics costs. The use of identical parts also allows economies of scale to be exploited in production, which reduces manufacturing costs. Assembly is also simplified, as the same assembly can be used regardless of the installation direction. At the same time, serviceability is improved, as fewer different components need to be kept in stock for spare parts supply.

Alternatively, in an embodiment which includes worms, spindles and/or helically toothed gears, for example as components of a gear stage configured as a worm gear, a spindle gear or a crossed helical gear, the steering system components may be configured such that, with these components, a steering system that is mirror-symmetrical to the steering system with respect to a mirror plane, in particular a vertical mirror plane, at least with regard to the arrangement and orientation of the first and second steering gear input shafts, the steering gear output shaft and the fastening elements, can be manufactured when all worms, spindles and helically toothed gears are replaced by identical ones having an opposite helix direction. Such an embodiment likewise largely provides the advantage of using identical parts.

A particularly advantageous embodiment provides that the steering gear device housing, in particular in an opening in its housing wall, has at least one input shaft bearing receptacle for a steering gear input shaft bearing. A steering gear input shaft bearing can be arranged in the input shaft bearing receptacle for the rotatable mounting of the steering gear input shaft. This enables stable mounting of the steering gear input shaft. The steering gear input shaft bearing can advantageously be configured as a rolling bearing, in particular as a ball bearing or as a roller bearing or as an angular contact roller bearing.

A particularly advantageous embodiment is one in which the steering gear device housing has, in addition to the input shaft bearing receptacle, a further input shaft bearing receptacle which is arranged symmetrically with respect to a horizontal mirror plane in relation to the first input shaft bearing receptacle. A steering gear input shaft bearing for supporting the steering gear input shaft can be arranged in the input shaft bearing receptacle. This symmetrical design facilitates production and enables cost-effective implementation of left-hand and right-hand drive variants with regard to the rotational bearing of the steering gear input shaft.

In particular, it may be advantageous to provide that, depending on whether a steering system is to be manufactured for a right-hand drive vehicle or for a left-hand drive vehicle, the steering gear input shaft bearing is inserted either into the input shaft bearing receptacle or into the additional input shaft bearing receptacle. Preferably, the additional input shaft bearing receptacle is closed with a cover when the steering gear input shaft bearing is inserted into the input shaft bearing receptacle. Conversely, the input shaft bearing receptacle is preferably closed with a cover when the steering gear input shaft bearing is inserted into the additional input shaft bearing receptacle. The cover is preferably configured in such a way that it can be removed without damage, for example for maintenance purposes.

Alternatively, it may be advantageous to provide a steering gear input shaft bearing in both the input shaft bearing receptacle and the additional input shaft bearing receptacle in order to securely support the first steering gear input shaft for rotation. Depending on whether a steering system for a right-hand drive vehicle or a steering system for a left-hand drive vehicle is to be manufactured, the steering gear input shaft then protrudes from the steering gear device housing either through the opening of the input shaft bearing receptacle or through the opening of the further input shaft bearing receptacle. The opening of the other input shaft bearing receptacle is preferably closed with a cover.

The steering gear device housing may advantageously comprise an output shaft bearing receptacle for a steering gear output shaft bearing, thereby enabling precise rotational support of the steering gear output shaft. A steering gear output shaft bearing may be arranged in the output shaft bearing receptacle.

A particularly advantageous embodiment is one in which the steering gear device housing has, in addition to the output shaft bearing receptacle, a further output shaft bearing receptacle which is arranged symmetrically with respect to a mirror plane in relation to the first output shaft bearing receptacle. A steering gear output shaft bearing for supporting the steering gear output shaft can be arranged in the output shaft bearing receptacle. This symmetrical design facilitates production and enables cost-effective implementation of left-hand and right-hand drive variants with regard to the rotational bearing of the steering gear output shaft.

In particular, it may be advantageous to provide that, depending on whether a steering system for a right-hand drive vehicle or a steering system for a left-hand drive vehicle is to be manufactured, the steering gear output shaft bearing is inserted either into the output shaft bearing receptacle or into the additional output shaft bearing receptacle. Preferably, the additional output shaft bearing receptacle is closed with a cover when the steering gear output shaft bearing is inserted into the output shaft bearing receptacle. Conversely, the output shaft bearing receptacle is preferably closed with a cover when the steering gear output shaft bearing is inserted into the additional output shaft bearing receptacle. The cover is preferably configured in such a way that it can be removed without damage, for example for maintenance purposes.

A method for manufacturing a plurality of steering systems is particularly advantageous, in which steering system components are first provided. These include, in particular, a plurality of identical electric motors, a plurality of steering gear devices, and a plurality of steering gear device housings. The steering gear devices each include a first steering gear input shaft that is couplable with a steering shaft, a second steering gear input shaft that is or is couplable with the electric motor for drivable coupling, and a steering gear output shaft. The steering gear device housings each have fastening elements for fastening the steering gear device housing to a higher-level structure, in particular a vehicle body, wherein the steering gear device housings are configured in such a way that a mirror-symmetrical steering system can be produced with them, at least with regard to the arrangement and alignment of the first and second steering gear input shafts, the steering gear output shaft, and the fastening elements. mirror plane, at least with regard to the arrangement and alignment of the first and second steering gear input shafts, the steering gear output shaft, and the fastening elements. Preferably, the steering gear device housings are configured in such a way that they can be used to produce steering systems for both right-hand drive vehicles and left-hand drive vehicles.

A particularly advantageous embodiment is one in which the steering systems for left-hand drive and right-hand drive vehicles are assembled entirely from the same steering system components. This leads to a significant reduction in the variety of parts and thus to cost savings in production and logistics. Standardizing the components also simplifies warehousing and reduces the complexity of assembly.

In another advantageous embodiment, the steering systems for left-hand drive and right-hand drive vehicles can also consist of the same components, with the exception that worms, spindles, or helical gears with opposite helix directions are used.

As mentioned above, it may be advantageous to provide, depending on whether a steering system is to be manufactured for a right-hand drive vehicle or for a left-hand drive vehicle, a steering gear input shaft bearing for rotary mounting of the steering gear input shaft is inserted either into an input shaft bearing receptacle or into a further input shaft bearing receptacle arranged mirror-symmetrically with respect to the input shaft bearing receptacle.

As already mentioned above, it may be advantageous to provide, depending on whether a steering system is to be manufactured for a right-hand drive vehicle or for a left-hand drive vehicle, a steering gear output shaft bearing for rotary mounting of the steering gear output shaft is inserted either into an output shaft bearing receptacle or into a further output shaft bearing receptacle which is arranged mirror-symmetrically with respect to the output shaft bearing receptacle.

A particularly advantageous embodiment is one in which the distance of a plane perpendicular to the steering gear output shaft, in which the axis of rotation of the first steering gear input shaft is located, from the plane in which the portion of the outer side of the steering gear device housing directly surrounding the output shaft bearing receptacle is located, lies in the range from 70 mm to 90 mm or in particular amounts to 80 mm. These dimensions enable a good balance between compactness, structural stability and utilization of the available installation space.

The steering system may advantageously be configured such that the axes of rotation of the first steering gear input shaft and the steering gear output shaft are skewed relative to one another. This arrangement allows particularly efficient utilization of the installation space and integration into a vehicle. In particular, the axes of rotation of the first steering gear input shaft and the steering gear output shaft may additionally be arranged in planes perpendicular to one another, which enables particularly efficient utilization of the installation space and integration into a vehicle. A particularly advantageous embodiment is one in which the axes of rotation of the first steering gear input shaft and the steering gear output shaft have a spacing of 80 mm to 100 mm, in particular 90 mm.

A particularly advantageous steering arrangement comprises a steering system according to the invention and a steering shaft which is operatively connected to a steering handle, wherein the steering shaft is, preferably directly, coupled to the first steering gear input shaft or is manufactured integrally therewith.

A particularly advantageous vehicle, in particular a commercial vehicle, very particularly a truck or a bus, comprises a steering system according to the invention or a steering arrangement according to the invention.

In general, a transmission device, in particular for a steering system or steering arrangement according to the invention, is particularly advantageous if it has a cycloidal gear comprising at least one externally toothed cycloidal disc which meshes with roller pins arranged along a circumferential circle, wherein movement of the cycloidal disc is generated by a plurality of eccentrically arranged eccentric shafts driven for rotation, each of which is mounted so as to be rotatable about itself, each eccentric shaft having an eccentric shaft gear and a further eccentric shaft gear. A first preceding stage is connected directly upstream of the cycloidal gear of the gear device, wherein the eccentric shaft gears are components of the first preceding stage. A second preceding stage is also connected directly upstream of the cycloidal gear of the gear device, wherein the further eccentric shaft gears are components of the second preceding stage.

The gear mechanism can be advantageously configured such that each eccentric shaft gear has a toothing, in particular an external toothing, which is in meshing engagement with the toothing of an intermediate gear, which is a component of the preceding stage. In particular, the intermediate gear may be configured as a ring gear which has internal toothing, in particular with straight teeth, which are in meshing engagement with the toothing of the eccentric shaft gears, which is configured as external toothing.

Alternatively or additionally, it may be advantageous to provide that each further eccentric shaft gear is in meshing engagement with a centrally arranged and rotatably mounted drive gear, which is a component of the second preceding stage.

In a particularly compact and robust embodiment, the eccentric shaft gear and the additional eccentric shaft gear of each eccentric shaft are arranged on different sides of the at least one cycloidal disc.

In the drawing, the subject matter of the invention is illustrated by way of example and schematically and is described below with reference to the figures, wherein identical or functionally identical elements are usually provided with the same reference signs even in different embodiments.

The figures show:
- Fig. 1: a first embodiment of a steering system according to the invention in a sectional view,
- Fig. 2: the first embodiment of a steering system according to the invention in a further sectional view,
- Fig. 3: the first embodiment of a steering system according to the invention in a side view,
- Fig. 4: the first embodiment of a steering system according to the invention in a perspective view,
- Fig. 5: the first embodiment of a steering system according to the invention in a perspective view from the front and, in a further perspective view from the front, a steering system that is mirror-symmetrical with respect to the steering system in relation to a mirror plane, in particular a vertical mirror plane,
- Fig. 6: shows a perspective view from behind of the first embodiment of a steering system according to the invention and, in a further perspective view from behind, a steering system that is mirror-symmetrical to the steering system with respect to a mirror plane, in particular a vertical mirror plane,
- Fig. 7: shows a side view of the first embodiment of a steering system according to the invention and, in a further side view from behind, a steering system that is mirror-symmetrical to the steering system with respect to a mirror plane, in particular a vertical mirror plane, and
- Fig. 8: a schematic detailed view of the crossed helical gear and the RV gear of the first embodiment of a steering system according to the invention,
- Fig. 9: a second embodiment of a steering system according to the invention in a sectional view,
- Fig. 10: the second embodiment of a steering system according to the invention in a further
- Fig. 11: sectional view, the second embodiment of a steering system according to the invention in a side view,
- Fig. 12: the second embodiment of a steering system according to the invention in a perspective view,
- Fig. 13: shows a perspective view from the front of the second embodiment of a steering system according to the invention and, in a further perspective view from the front, a steering system that is mirror-symmetrical to the steering system with respect to a mirror plane, in particular a vertical mirror plane,
- Fig. 14: a perspective view from the rear of the second embodiment of a steering system according to the invention and, in a further perspective view from the rear, a steering system that is mirror-symmetrical to the steering system with respect to a mirror plane, in particular a vertical mirror plane,
- Fig. 15: in a side view, the second embodiment of a steering system according to the invention, and in a further side view from behind, a steering system that is mirror-symmetrical with respect to the steering system in relation to a mirror plane, in particular a vertical mirror plane, and
- Fig. 16: a schematic detailed view of the crossed helical gear and the RV gear of the second embodiment of a steering system according to the invention,
- Fig. 17: a schematic detailed view of an embodiment of a combination of a crossed helical gear and an RV gear for a steering system according to the invention, and
- Fig. 18: a schematic detailed view of a further embodiment of a combination of a crossed helical gear and an RV gear for a steering system according to the invention, which is mirror-symmetrical with respect to the arrangement and alignment of the first and second steering gear input shafts, the steering gear output shaft, and the fastening elements to the steering system, for which the combination according to Figure 17 is configured.

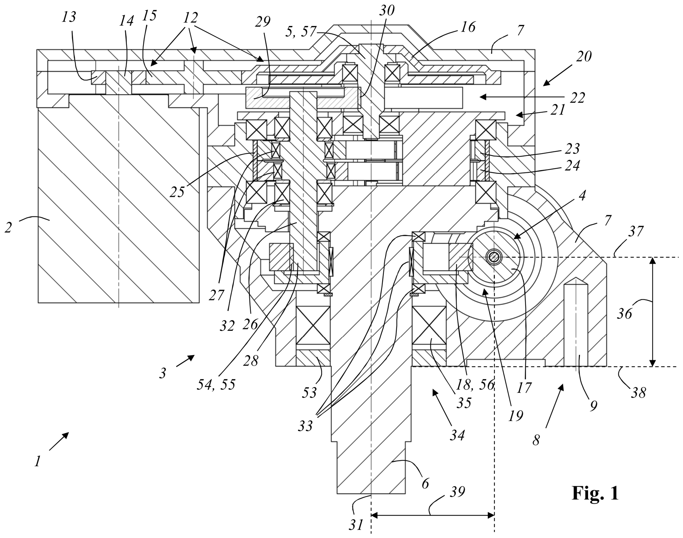

Fig. 1 shows a first embodiment of a steering system 1 according to the invention in a sectional view.

The steering system 1 consists of steering system components including at least an electric motor 2 and a steering gear device 3 having a first steering gear input shaft 4 couplable to a (not shown) steering shaft and a second steering gear input shaft 5 drivably coupled to the electric motor 2, and having a steering gear output shaft 6. The steering system components further include a steering gear device housing 7 which has a plurality of fastening elements 8 for fastening the steering gear device housing 7 to a higher-level structure, in particular a vehicle body. The fastening elements 8 of the steering gear device housing 7 may, for example, be configured as through-openings or as threaded bores 9 for fastening screws.

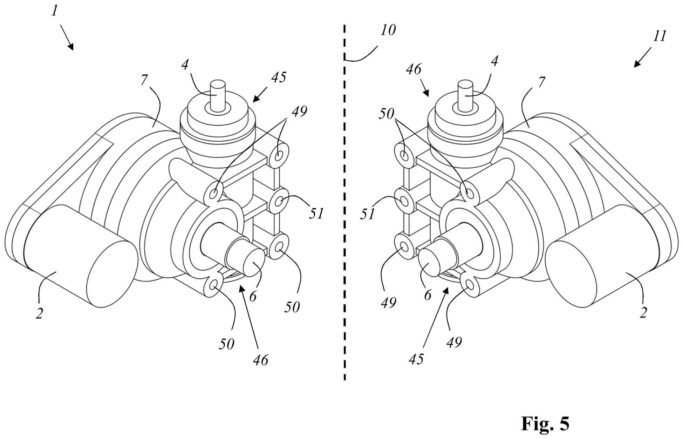

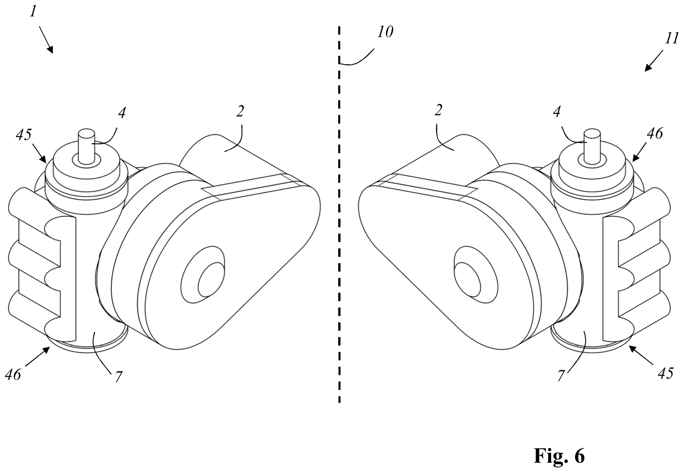

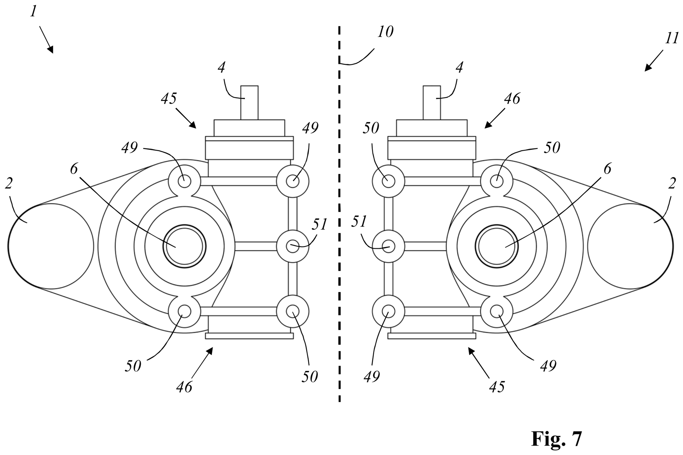

The steering gear device housing 7 is configured such that, with this housing, a steering system 11 that is mirror-symmetrical to the steering system 1 with respect to a mirror plane 10, in particular a vertical mirror plane, at least with regard to the arrangement and orientation of the first steering gear input shaft 4 and the second steering gear input shaft 5, the steering gear output shaft 6 and the fastening elements 8, can be manufactured, which is illustrated in Figs. 5 to 7 and explained in greater detail below. Specifically, in this embodiment the steering system components are configured such that, with these components, a steering system 11 that is mirror-symmetrical to the steering system 1 with respect to the mirror plane 10 with regard to the arrangement and orientation of the first steering gear input shaft 4 and the second steering gear input shaft 5, the steering gear output shaft 6 and the fastening elements 8, can be manufactured when the helically toothed gears 17, 18 of a crossed helical gear 19 enclosed in the steering gear device housing 7 are replaced by identical ones having an opposite helix direction.

The motor 2 is coupled to the second steering gear input shaft 5 by means of a transmission gear device 12. The transmission gear device 12 is configured as a spur gear and comprises a first spur gear 13 which is directly non-rotatably connected to an output shaft 14 of the motor 2. The transmission gear device 12 further comprises a rotatably mounted second spur gear 15 whose toothing is in meshing engagement with the toothing of the first spur gear 13. The transmission gear device 12 further comprises a third spur gear 16 which is directly non-rotatably connected to the second steering gear input shaft 5.

The torque path from the first steering gear input shaft 4 to the steering gear output shaft 6 has several gear stages drivably connected in series. A third gear stage is configured as a crossed helical gear 19, while a first gear stage connected drivably downstream of the third gear stage is configured as an RV gear 20. A second gear stage, which is described below, is configured between the third gear stage and the first gear stage.

The RV gear 20 comprises a cycloidal gear 21 and a preceding stage 22. The cycloidal gear 21 is drivably connected downstream of the motor 2 via the transmission gear device 12 and the preceding stage 22. The cycloidal gear 21 includes two cycloidal discs 23, 24, each having a cycloidal external toothing which is in engagement with roller pins 25 arranged along a circumferential circle. The movement of the cycloidal discs 23, 24 is generated by a plurality of eccentric shafts 26 which are each arranged eccentrically and are each rotatably mounted about their own axis relative to the cycloidal discs 23, 24 by means of a rolling bearing 27.

Each eccentric shaft 26 has an eccentric shaft gear 28 and a further eccentric shaft gear 29. The eccentric shaft gear 28 and the further eccentric shaft gear 29 of each eccentric shaft 26 are arranged on opposite sides of the two cycloidal discs 23, 24.

The further eccentric shaft gears 29 are components of the preceding stage 22. The centrally arranged second steering gear input shaft 5 has an external toothing 30 which is in meshing engagement with the external toothings of the further eccentric shaft gears 29. The second steering gear input shaft 5 thus functions as the drive gear 57 of the preceding stage 22 and transmits its rotary motion to the further eccentric shaft gears 29, whereby the eccentric shafts 26 drive the cycloidal discs 23, 24 into a wobbling motion in which the cycloidal discs 23, 24 roll circumferentially along the circumferential circle of the roller pins 25. In this process, the eccentric shafts 26 rotate not only about their own axes but, together with the cycloidal discs 23, 24, also about the central axis of rotation 31 of the RV gear 20. Each of the eccentric shafts 26 is coupled to the steering gear output shaft 6 via a respective further rolling bearing 32, so that the rotational movement of the cycloidal discs 23, 24 about the central axis of rotation 31 is transmitted via the eccentric shafts 26 to the steering gear output shaft 6.

In addition, each of the eccentric shafts 26 is drivably coupled to the first steering gear input shaft 4 via a second gear stage and via the crossed helical gear 19 (third gear stage). The crossed helical gear 19 comprises a first helical gear 17, which is arranged coaxially with the steering gear input shaft 4 and is indirectly connected to it in a rotationally fixed manner. The crossed helical gear 19 comprises a second helical gear 18, whose helical external toothing meshes with the helical external toothing of the first helical gear 17 in a meshing engagement. The axes of rotation of the helical gears 17, 18 are arranged at an angle to each other, with the second helical gear 18 rotating about the central axis of rotation 31 of the cycloidal gear 20.

The second helical gear 18 is ring-shaped and comprises helical external toothing on its outer circumference, which is in meshing engagement with the helical external toothing of the first helical gear 17. Along its inner circumference, the second helical gear 18 comprises internal toothing 54, which is in meshing engagement with the external toothing 55 of the other eccentric shaft gears 29. The internal toothing 54 and the external toothing 55 of the other eccentric shaft gears 29 form the second gear stage, which is drivably connected between the first gear stage and the second gear stage. The second helical gear 18 is mounted so as to be rotatable relative to the steering gear output shaft 6 by means of a plurality of rolling bearings 33.

In this respect, the torque path from the first steering gear input shaft 4 to the steering gear output shaft 6 comprises three drivably connected gear stages. The third of these gear stages is formed by the crossed helical gear 19. The second of these gear stages is formed by the meshing engagement of the, preferably straight, internal toothing 54 of the second helical gear 18 with the external toothing 55 of the eccentric shaft gears 28. A first of these gear stages is formed by the cycloidal gear 21. The helical gear 18 forms an intermediate gear 56, which is a component of two of the gear stages connected in series drivably. With its helical external toothing, it is a component of the crossed helical gear 19 and thus of the third gear stage. With its internal toothing 54, it is also a component of the second gear stage.

The steering gear device housing 7 comprises an output shaft bearing receptacle 34 in which a steering gear output shaft bearing 35 for rotatably supporting the steering gear output shaft 6 and a seal 53 are arranged.

The distance 36 between a plane 37 perpendicular to the steering gear output shaft 6, in which the axis of rotation of the first steering gear input shaft 4 is arranged, to the plane 38 in which the part of the outside of the steering gear device housing 7 that directly surrounds the output shaft bearing receptacle 34 is arranged is in the range of 70 mm to 90 mm and amounts to preferably 80 mm.

The axes of rotation of the first steering gear input shaft 4 and the steering gear output shaft 6 are arranged in mutually perpendicular planes, which comprise a distance 39 of 80 mm to 100 mm, in particular 90 mm.

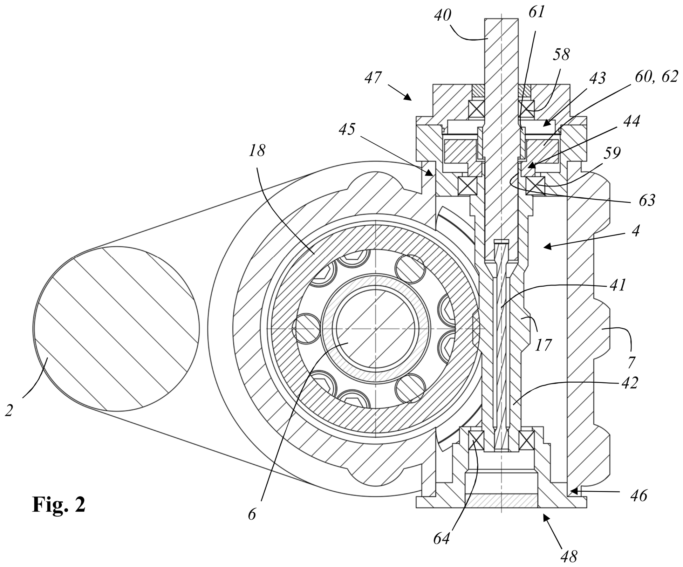

Figure 2 shows the first embodiment of a steering system 1 according to the invention in a further sectional view.

Figure 2 shows that the steering gear input shaft 4 comprises an input section 40 configured as a solid shaft, a middle section 41 configured as a solid shaft, and a hollow shaft section 42, which forms the first helical gear 17 in one section.

The middle section 41 is connected at one end directly in a non-rotating manner to the input section 40 and at the other end directly in a non-rotating manner to the hollow shaft section 42, wherein the hollow shaft section 42 surrounds the middle section 41 and a part of the input section 40.

The steering system 1 comprises a first rotary angle sensor 43 that detects the rotational position and rotational speed of the input section 40 of the first steering gear input shaft 4 and the steering speed. The steering system 1 also comprises a second rotary angle sensor 44, which detects the rotational position of the part of the hollow shaft section 42 of the first steering gear input shaft 4 surrounding the input section 40. The first rotary angle sensor 43 comprises a first rotary angle sensor element 60 and a first coding element 61, for example in the form of a slotted disc, a toothed ring or a magnetic wheel, which interacts with the first rotary angle sensor element 60 in a contactless manner. The second rotary angle sensor 44 has a second rotary angle sensor element 62 and a second coding element 63, for example in the form of a line disc, a toothed ring or a magnetic wheel, wherein the first rotary angle sensor element 60 and the second rotary angle sensor element 62 can advantageously be arranged together on the same carrier and/or in the same sensor housing. In the figure, the first rotary angle sensor element 60 and the second rotary angle sensor element 62 are illustrated together only schematically as a hatched closed polygon.

The measurement signals from the first rotary angle sensor element 60 and the second rotary angle sensor element 62 are transmitted to a control device (not shown) which controls the motor 2 taking into account the measurement signals. In this case, the control device can deduce the current torque exerted on the first steering gear input shaft 4 by means of a steering handle (not shown) from the respective difference between the rotational angle of the first rotary angle sensor element 60 and the rotational angle of the second rotary angle sensor element 62. This is possible because the input section 40, on which the first coding element 61 is arranged, and the end of the hollow shaft section 42, which is directly connected to the middle section 41 and on which the second coding element 63 is arranged, both belong to the first steering gear input shaft 4, but are located drivably in front of and behind the first helical gear 17 of the crossed helical gear 19. They therefore rotate relative to each other when torque is applied due to torsion, particularly of the comparatively thin center section 41, whereby the higher the torque exerted on the first steering gear input shaft 4 by means of a steering handle (not shown), the greater the rotational angle difference.

It may be advantageous to provide that the control device controls the motor 2 at least as a function of the rotational angle difference between the first rotary angle sensor element 60 and the second rotary angle sensor element 62.

The steering gear device housing 7 has an input shaft bearing receptacle 45 and a further input shaft bearing receptacle 46, which is arranged symmetrically with respect to a horizontal mirror plane in relation to the first input shaft bearing receptacle. A steering gear input shaft bearing module 47 is arranged in the input shaft bearing receptacle 45, which comprises a first rolling bearing 58 and a second rolling bearing 59. The input section 40 is rotatably supported by means of the first rolling bearing 58. The end of the hollow shaft section 42 surrounding the input section 40 is rotatably supported by means of the second rolling bearing 59.

A further steering gear input shaft bearing module 48 is arranged in the further input shaft bearing receptacle 46, which comprises a rolling bearing 64. The end of the hollow shaft section 42 directly connected to the middle section 41 is rotatably supported by means of the rolling bearing 64.

The steering gear input shaft bearing module 47 and the additional steering gear input shaft bearing module 48 serve in particular to securely rotatably support the first steering gear input shaft 4, wherein the first rotary angle sensor element 60 and the second rotary angle sensor element 62 are spatially integrated into the steering gear input shaft bearing module 47. The steering gear input shaft 4 protrudes outwards through the opening of the input shaft bearing receptacle 45.

If, on the other hand, instead of steering system 1, which may be configured for a left-hand drive vehicle, for example, a mirror-symmetrical steering system 11 for a right-hand drive vehicle is to be manufactured, the steering gear device housing 7 can be used in such a way that the steering gear input shaft 4 protrudes outwards from the steering gear device housing 7 through the opening of the further input shaft bearing receptacle 46, as illustrated in Figures 5 to 7.

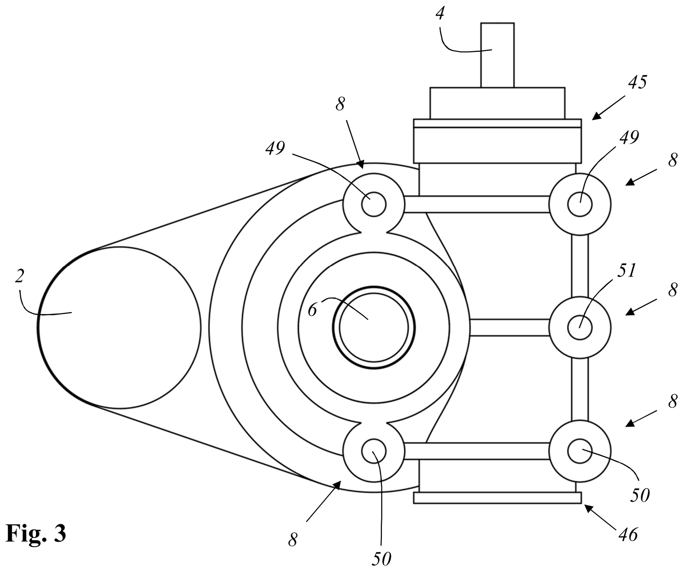

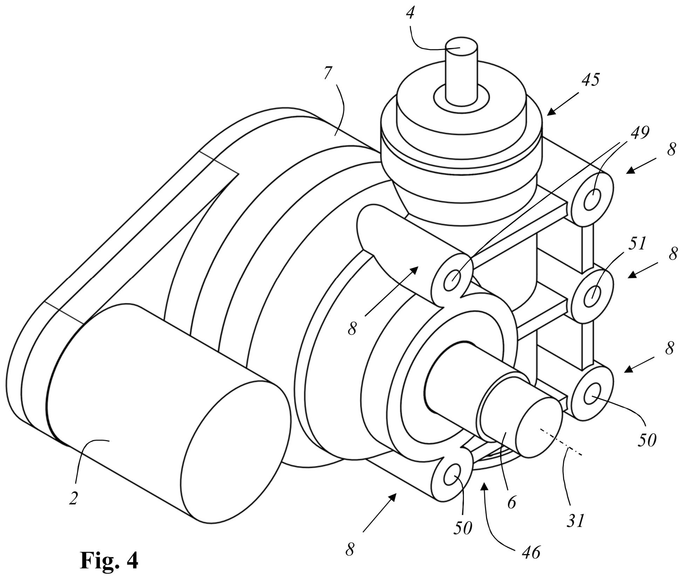

Figure 3 shows the steering system 1 in a side illustration, while Figure 4 shows the steering system 1 in a perspective illustration. In both figures, it can be seen that there are a total of five fastening elements 8, which may be configured as threaded holes.

There are two upper fastening elements 49, two lower fastening elements 50, and one middle fastening element 51. The fastening elements 8 are arranged mirror-symmetrically to each other with respect to a plane 52 in which the central axis of rotation 31 and the middle fastening element 51 are located.

As illustrated by Figs. 5 to 7, the steering gear device housing 7 is configured such that, with this housing, a steering system 11 that is mirror-symmetrical to the steering system 1 with respect to a mirror plane 10, in particular a vertical mirror plane, with regard to the arrangement and orientation of the first steering gear input shaft 4 and the second steering gear input shaft 5, the steering gear output shaft 6 and the fastening elements 8, can be manufactured. While, in the steering system 1, the two upper fastening elements 49 are arranged at the top, in the mirror-symmetrical steering system 11 the two upper fastening elements 49 are arranged at the bottom. While, in the steering system 1, the two lower fastening elements 50 are arranged at the bottom, in the mirror-symmetrical steering system 11 the two lower fastening elements 50 are arranged at the top.

While the steering gear input shaft 4, in the steering system 1, projects outward through the opening of the input shaft bearing receptacle 45, the steering gear input shaft 4, in the mirror-symmetrical steering system 11, projects outward through the opening of the further input shaft bearing receptacle 46.

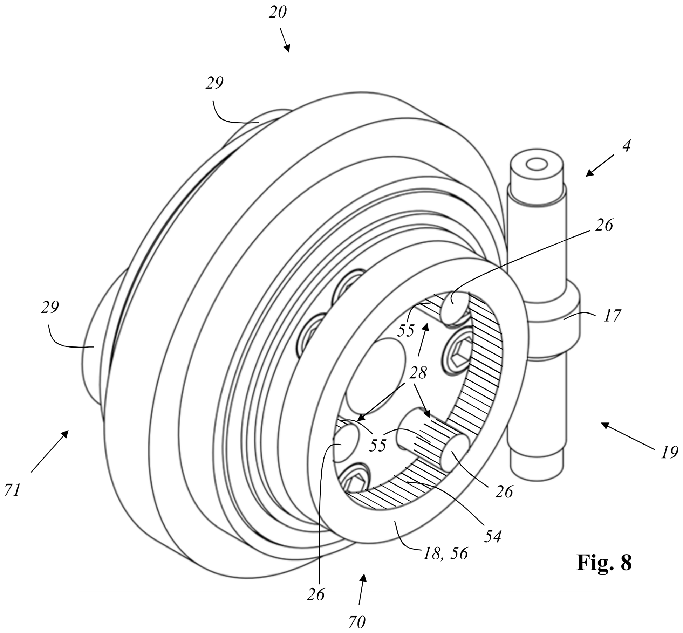

Fig. 8 shows a schematic detailed view of the crossed helical gear 19 and the RV gear 20 of the first embodiment of a steering system according to the invention, wherein the helical toothings of the first helically toothed gear 17 and the second helically toothed gear 18 are not illustrated for reasons of clarity.

Regardless of its advantageous use in a steering system according to the invention, Figure 8 shows, in general terms, an advantageous gear device comprising a cycloidal gear 20, which comprises at least one externally toothed cycloidal disc 23 (not shown in this figure), which engages with (not shown in this figure) , wherein movement of the cycloidal disc 23 is generated by a plurality of eccentrically arranged eccentric shafts 26 driven for rotation, each of which is rotatably supported about itself, each eccentric shaft 26 comprising an eccentric shaft gear 28 and a further eccentric shaft gear 29. A first preceding stage 70 is directly upstream of the cycloidal gear 20 of the gear device, wherein the eccentric shaft gears 26 are components of the first preceding stage 70. The cycloidal gear 20 of the gear device is also directly preceded by a second preceding stage 71, wherein the further eccentric shaft gears 29 and the second steering gear input shaft are components of the second preceding stage 71.

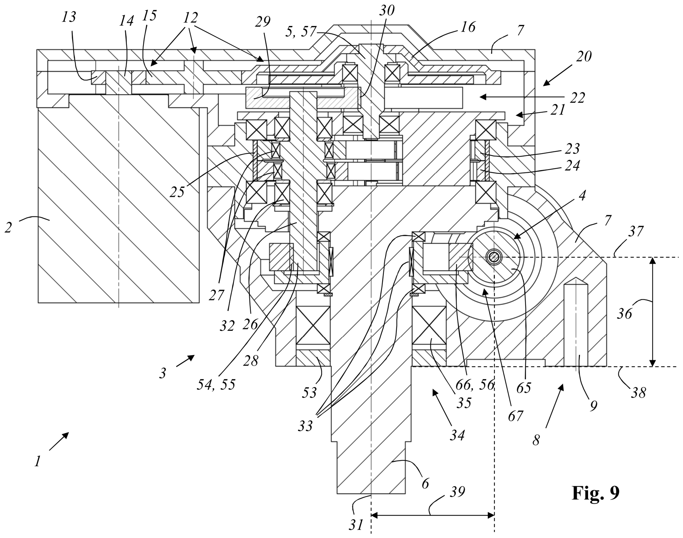

Fig. 9 shows a second embodiment of a steering system 1 according to the invention in a sectional view.

The steering system 1 consists of steering system components including at least one electric motor 2 and a steering gear device 3 having a first steering gear input shaft 4 couplable to a (not shown) steering shaft and a second steering gear input shaft 5 drivably coupled to the electric motor 2, and having a steering gear output shaft 6. The steering system components further include a steering gear device housing 7 which has a plurality of fastening elements 8 for fastening the steering gear device housing 7 to a higher-level structure, in particular a vehicle body. The fastening elements 8 of the steering gear device housing 7 may, for example, be configured as through-openings or as threaded bores 9 for fastening screws.

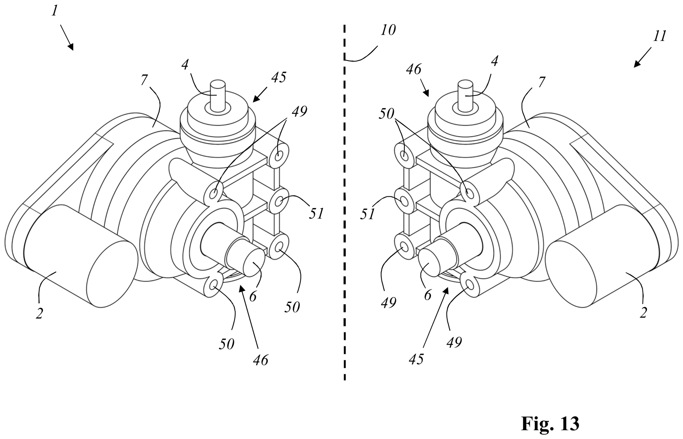

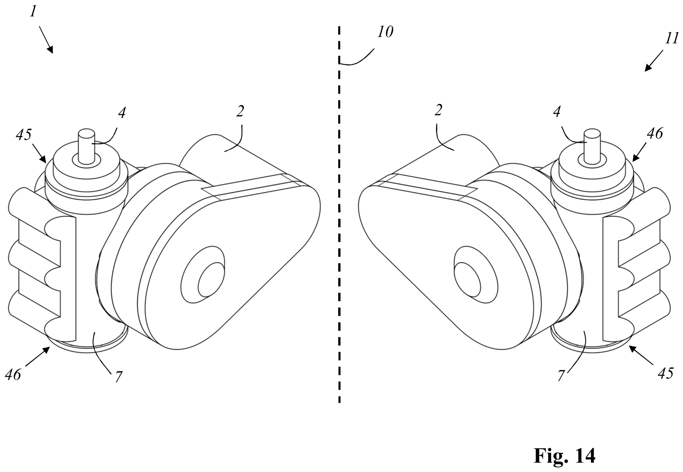

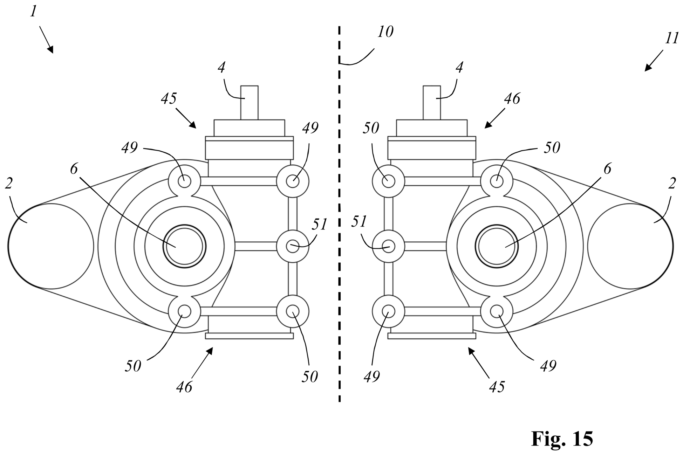

The steering gear device housing 7 is configured such that, with this housing, a steering system 11 that is mirror-symmetrical to the steering system 1 with respect to a mirror plane 10, in particular a vertical mirror plane, at least with regard to the arrangement and orientation of the first steering gear input shaft 4 and the second steering gear input shaft 5, the steering gear output shaft 6 and the fastening elements 8, can be manufactured, which is illustrated in Figs. 13 to 15 and explained in detail further below. Specifically, in this embodiment the steering system components are configured such that, with these components, a steering system 11 that is mirror-symmetrical to the steering system 1 with respect to the mirror plane 10 with regard to the arrangement and orientation of the first steering gear input shaft 4 and the second steering gear input shaft 5, the steering gear output shaft 6 and the fastening elements 8, can be manufactured when the worm shaft 65 of a worm gear 67 enclosed in the steering gear device housing 7, which in addition to the worm shaft 65 comprises a worm wheel 66, is replaced by an identical one having an opposite helix direction.

The motor 2 is coupled to the second steering gear input shaft 5 by means of a transmission gear device 12. The transmission gear device 12 is configured as a spur gear and comprises a first spur gear 13 which is directly non-rotatably connected to an output shaft 14 of the motor 2. The transmission gear device 12 further comprises a rotatably mounted second spur gear 15 whose toothing is in meshing engagement with the toothing of the first spur gear 13. The transmission gear device 12 further comprises a third spur gear 16 which is directly non-rotatably connected to the second steering gear input shaft 5.

The torque path from the first steering gear input shaft 4 to the steering gear output shaft 6 comprises several drivably connected gear stages. A third gear stage is configured as a crossed helical gear 19, while a first gear stage drivably connected downstream of the third gear stage is configured as an RV gear 20. A second gear stage, which is described below, is configured between the third gear stage and the first gear stage.

The RV gear 20 comprises a cycloidal gear 21 and a preceding stage 22. The cycloidal gear 21 is drivably connected downstream of the motor 2 via the transmission gear device 12 and the preceding stage 22. The cycloidal gear 21 includes two cycloidal discs 23, 24 each having a cycloidal external toothing which is in engagement with roller pins 25 arranged along a circumferential circle. The movement of the cycloidal discs 23, 24 is generated by a plurality of eccentric shafts 26 which are each arranged eccentrically and are each rotatably mounted about their own axis relative to the cycloidal discs 23, 24 by means of a rolling bearing 27.

Each eccentric shaft 26 has an eccentric shaft gear 28 and a further eccentric shaft gear 29. The eccentric shaft gear 28 and the further eccentric shaft gear 29 of each eccentric shaft 26 are arranged on different sides of the two cycloidal discs 23, 24.

The further eccentric shaft gears 29 are part of the preceding stage 22. The centrally arranged second steering gear input shaft 5 has an external toothing 30 which is in meshing engagement with the external toothings of the further eccentric shaft gears 29. The second steering gear input shaft 5 thus functions as the drive gear 57 of the preceding stage 22 and transmits its rotary motion to the further eccentric shaft gears 29, whereby the eccentric shafts 26 drive the cycloidal discs 23, 24 into a wobbling motion in which the cycloidal discs 23, 24 roll circumferentially along the circumferential circle of the roller pins 25, wherein the eccentric shafts 26, in addition to rotating about their own axes, rotate together with the cycloidal discs 23, 24 about the central axis of rotation 31 of the RV gear. Each of the eccentric shafts 26 is coupled to the steering gear output shaft 6 via a respective further rolling bearing 32, so that the rotational movement of the cycloidal discs 23, 24 about the central axis of rotation 31 is transmitted via the eccentric shafts 26 to the steering gear output shaft.

In addition, each of the eccentric shafts 26 is drivably coupled to the first steering gear input shaft 4 via the worm gear 67. As already mentioned, the worm gear 67 comprises a worm shaft 65 which is arranged coaxially with the steering gear input shaft 4 and is indirectly non-rotatably connected thereto. The worm gear 67 further comprises a worm wheel 66 whose external toothing is in meshing engagement with the worm shaft 65. The axes of rotation of the worm shaft 65 and of the worm wheel 66 are arranged skewed relative to one another, wherein the worm wheel 66 rotates about the central axis of rotation 31 of the cycloidal gear 20.

The worm wheel 66 is ring-shaped and, as already mentioned, comprises external toothing on its outer circumference that is in meshing engagement with the worm shaft 65. Along its inner circumference, the worm wheel 66 comprises internal toothing 54 that engage with the external toothing 55 of the other eccentric shaft gears 29. The internal toothing 54 and the external toothing 55 of the other eccentric shaft gears 29 form the second gear stage, which is drivably connected between the first gear stage and the second gear stage. The worm wheel 66 is rotatably supported relative to the steering gear output shaft 6 by means of several rolling bearings 33.

In this respect, the torque path from the first steering gear input shaft 4 to the steering gear output shaft 6 comprises three drivably connected gear stages. The third of these gear stages is formed by the worm gear 67. The second of these gear stages is formed by the meshing engagement of the preferably straight internal toothing 54 of the worm wheel 66 with the external toothing 55 of the eccentric shaft gears 28. A first of these gear stages is formed by the cycloidal gear 21. The worm wheel 66 forms an intermediate gear 56, which is a component of two of the gear stages connected in series drivably. With its helical external toothing, it is a component of the crossed helical gear 19 and thus of the third gear stage. With its internal toothing 54, it is also a component of the second gear stage.

The steering gear device housing 7 comprises an output shaft bearing receptacle 34 in which a steering gear output shaft bearing 35 for rotary support of the steering gear output shaft 6 and a seal 53 are arranged.

The distance 36 between a plane 37 perpendicular to the steering gear output shaft 6, in which the axis of rotation of the first steering gear input shaft 4 is located, and the plane 38 in which the part of the outside of the steering gear device housing 7 that directly surrounds the output shaft bearing receptacle 34 is located, is in the range of 70 mm to 90 mm and preferentially amounts to 80 mm.

The axes of rotation of the first steering gear input shaft 4 and the steering gear output shaft 6 are arranged in planes perpendicular to each other, which comprise a distance 39 of 80 mm to 100 mm, in particular 90 mm, between them.

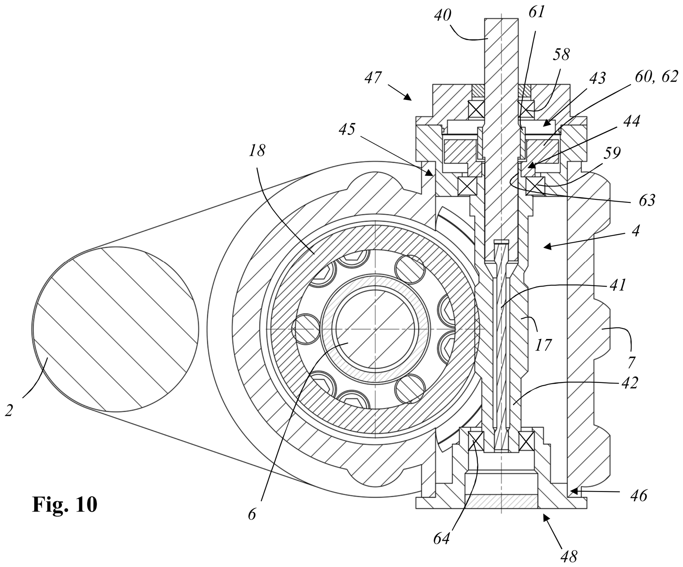

Figure 10 shows a further sectional view of the second embodiment of a steering system 1 according to the invention.

Figure 10 shows that the steering gear input shaft 4 comprises an input section 40 configured as a solid shaft, a middle section 41 configured as a solid shaft, and a hollow shaft section 42, which forms the first helical gear 17 in one section.

The middle section 41 is connected at one end directly in a rotationally fixed manner to the input section 40 and at the other end directly in a rotationally fixed manner to the hollow shaft section 42, wherein the hollow shaft section 42 surrounds the middle section 41 and a part of the input section 40.

The steering system 1 comprises a first rotary angle sensor 43 that detects the rotational position and rotational speed of the input section 40 of the first steering gear input shaft 4. The steering system 1 also comprises a second rotary angle sensor 44, which detects the rotational position of the part of the hollow shaft section 42 of the first steering gear input shaft 4 surrounding the input section 40. The first rotary angle sensor 43 comprises a first rotary angle sensor element 60 and a first coding element 61, for example in the form of a line disc, a toothed ring or a magnetic wheel, which interacts with the first rotary angle sensor element 60 in a contactless manner. The second rotary angle sensor 44 has a second rotary angle sensor element 62 and a second coding element 63, for example in the form of a line disc, a toothed ring or a magnetic wheel, wherein the first rotary angle sensor element 60 and the second rotary angle sensor element 62 can advantageously be arranged together on the same carrier and/or in the same sensor housing. In the figure, the first rotary angle sensor element 60 and the second rotary angle sensor element 62 are illustrated together only schematically as a hatched closed polygon.

The measurement signals from the first rotary angle sensor element 60 and the second rotary angle sensor element 62 are transmitted to a control device (not shown) which controls the motor 2 taking into account the measurement signals. In this case, the control device can deduce the current torque exerted on the first steering gear input shaft 4 by means of a steering handle (not shown) from the respective difference between the rotational angle of the first rotary angle sensor element 60 and the rotational angle of the second rotary angle sensor element 62. This is possible because the input section 40, on which the first coding element 61 is arranged, and the end of the hollow shaft section 42, which is directly connected to the middle section 41 and on which the second coding element 63 is arranged, both belong to the first steering gear input shaft 4, but are located drivably in front of and behind the worm wheel 66 of the worm gear 67. They therefore rotate relative to each other when torque is applied due to torsion, particularly of the comparatively thin center section 41, whereby the higher the torque exerted on the first steering gear input shaft 4 by means of a steering handle (not shown), the greater the rotational angle difference.

Advantageously, the control device may be designed to control the motor 2 at least in dependence on the rotational angle difference between the first rotary angle sensor element 60 and the second rotary angle sensor element 62.

The steering gear device housing 7 comprises an input shaft bearing receptacle 45 and a further input shaft bearing receptacle 46, which is mirror-symmetrical with respect to a horizontal mirror plane in relation to the first input shaft bearing receptacle. A steering gear input shaft bearing module 47 is arranged in the input shaft bearing receptacle 45, which comprises a first rolling bearing 58 and a second rolling bearing 59. The input section 40 is rotatably supported by means of the first rolling bearing 58. The end of the hollow shaft section 42 surrounding the input section 40 is rotatably supported by means of the second rolling bearing 59.

A further steering gear input shaft bearing module 48 is arranged in the further input shaft bearing receptacle 46, which comprises a rolling bearing 64. The end of the hollow shaft section 42 directly connected to the middle section 41 is rotatably supported by means of the rolling bearing 64.

The steering gear input shaft bearing module 47 and the further steering gear input shaft bearing module 48 serve in particular to support the first steering gear input shaft 4 in a securely rotatable manner, wherein the first rotary angle sensor element 60 and the second rotary angle sensor element 62 are spatially integrated into the steering gear input shaft bearing module 47. The steering gear input shaft 4 protrudes outwards through the opening of the input shaft bearing receptacle 45.

If, on the other hand, instead of steering system 1, which may be configured for a left-hand drive vehicle, for example, a mirror-symmetrical steering system 11 for a right-hand drive vehicle is to be manufactured, the steering gear device housing 7 can be used in such a way that the steering gear input shaft 4 protrudes outwards from the steering gear device housing 7 through the opening of the further input shaft bearing receptacle 46, as illustrated in Figures 13 to 15.

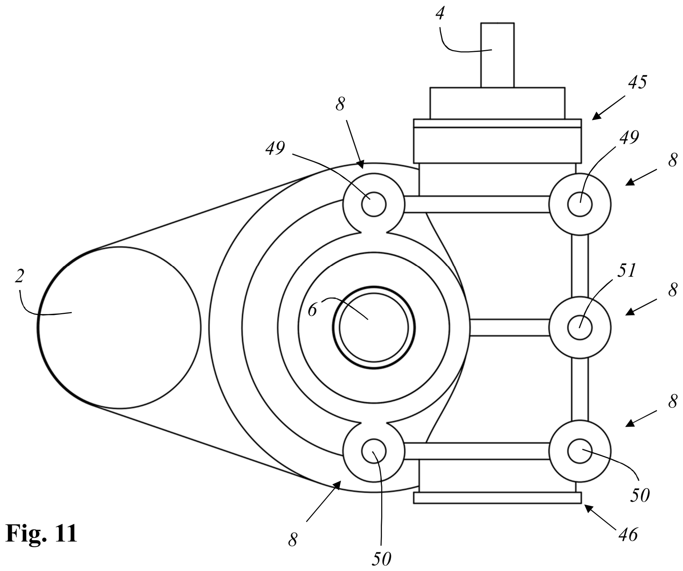

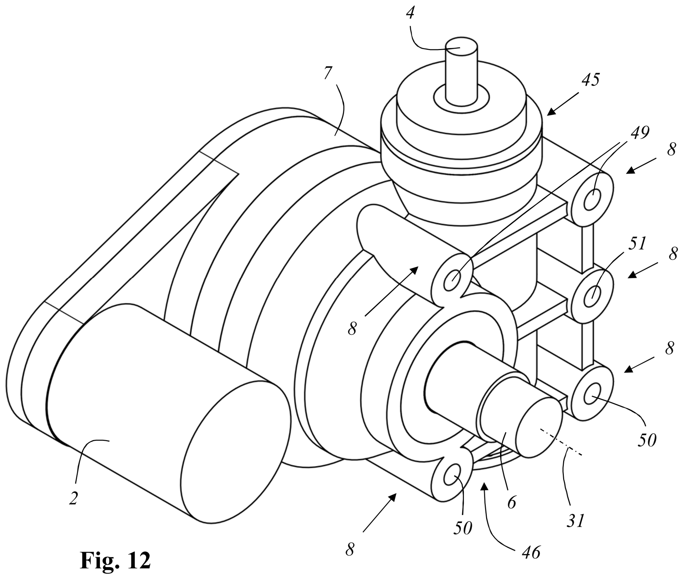

Figure 11 shows the steering system 1 in a side illustration, while Figure 12 shows the steering system 1 in a perspective illustration. Both figures show that there are a total of five fastening elements 8, which may be configured as threaded holes.

There are two upper fastening elements 49, two lower fastening elements 50, and one middle fastening element 51. The fastening elements 8 are mirror-symmetrical with respect to a plane 52 in which the central axis of rotation 31 and the middle fastening element 51 are located.

As illustrated by Figs. 13 to 15, the steering gear device housing 7 is configured such that, with this housing, a steering system 11 that is mirror-symmetrical to the steering system 1 with respect to a mirror plane 10, in particular a vertical mirror plane, with regard to the arrangement and orientation of the first steering gear input shaft 4 and the second steering gear input shaft 5, the steering gear output shaft 6 and the fastening elements 8, can be manufactured. While, in the steering system 1, the two upper fastening elements 49 are arranged at the top, in the mirror-symmetrical steering system 11 the two upper fastening elements 49 are arranged at the bottom. While, in the steering system 1, the two lower fastening elements 50 are arranged at the bottom, in the mirror-symmetrical steering system 11 the two lower fastening elements 50 are arranged at the top.

While the steering gear input shaft 4, in the steering system 1, projects outward through the opening of the input shaft bearing receptacle 45, the steering gear input shaft 4, in the mirror-symmetrical steering system 11, projects outward through the opening of the further input shaft bearing receptacle 46.

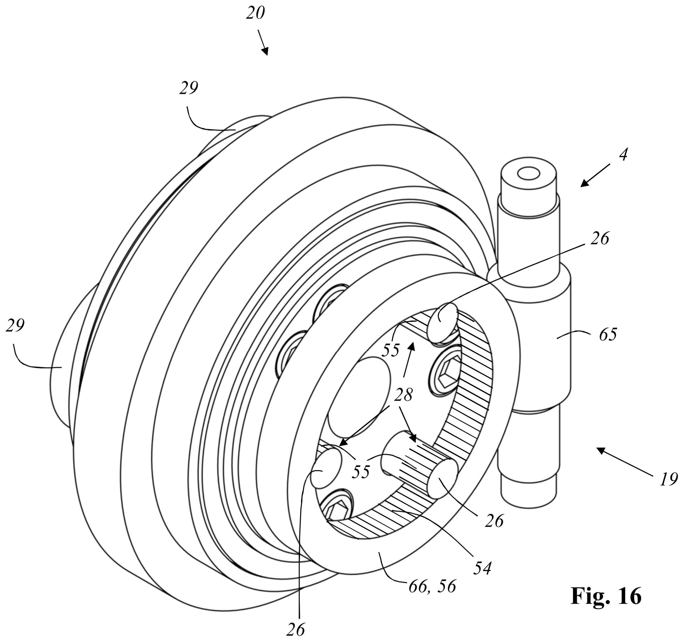

Fig. 16 shows a schematic detailed view of the worm gear 67 and the RV gear 20 of the second embodiment of a steering system according to the invention, wherein the external toothing of the worm wheel 66 and the thread of the worm shaft 65 are not illustrated for reasons of clarity.

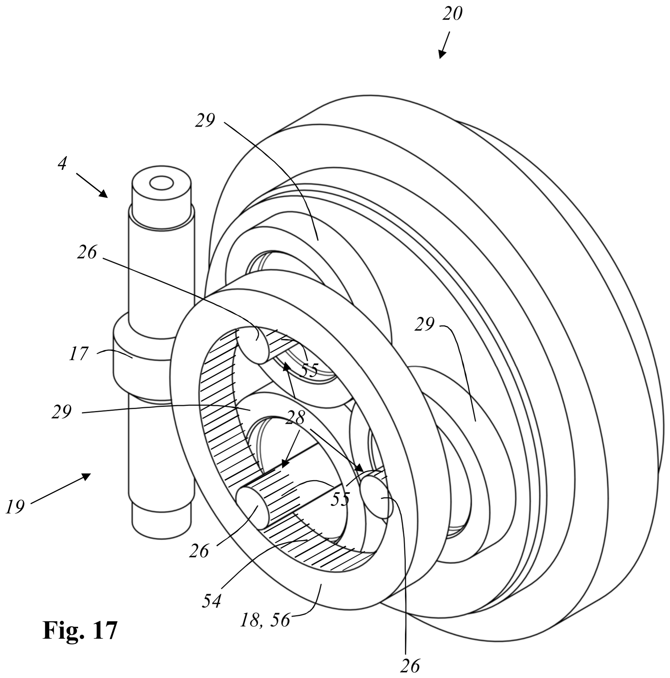

Fig. 17 shows a schematic detailed view of an embodiment of a combination of a crossed helical gear 19 and an RV gear 20 for a steering system according to the invention.

In contrast to the combination of a crossed helical gear 19 and an RV gear 20 illustrated in Fig. 8, the eccentric shaft gears 28 and the further eccentric shaft gears of each eccentric shaft are arranged on the same side of the two cycloidal discs 23, 24.

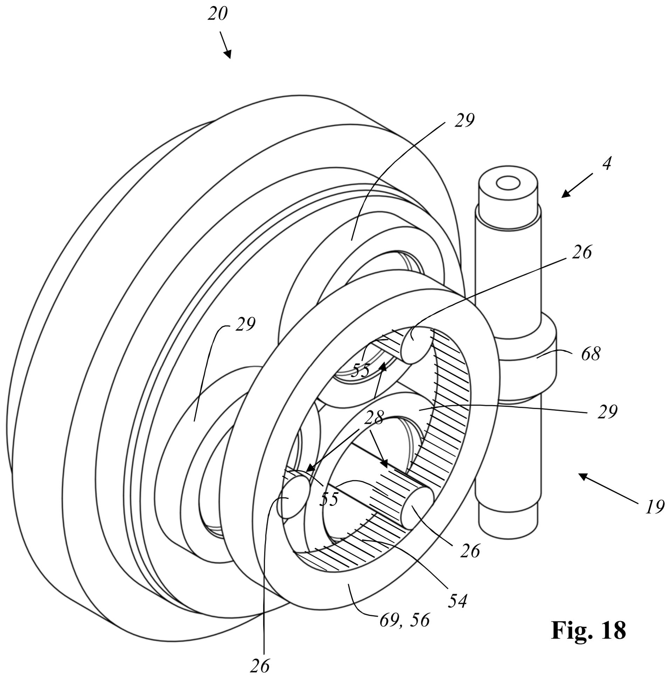

Fig. 18 shows a schematic detailed view of a further embodiment of a combination of a crossed helical gear 19 and an RV gear 20 for a mirror-symmetrical steering system 11 according to the invention, which is mirror-symmetrical to the steering system 1 at least with regard to the arrangement and orientation of the first steering gear input shaft 4 and the second steering gear input shaft 5, the steering gear output shaft 6 and the fastening elements 8, for which the combination according to Fig. 17 is configured.

The combination of a crossed helical gear 19 and an RV gear 20 illustrated in Fig. 18 is manufactured from the same components as the combination of a crossed helical gear 19 and an RV gear 20 illustrated in Fig. 17 and is mirror-symmetrical thereto, wherein, however, the first helically toothed gear 17 is replaced by an otherwise identical first helically toothed gear 68 having an opposite helix direction, and wherein the second helically toothed gear 18 is replaced by an otherwise identical second helically toothed gear 69 having an opposite helix direction.

### List of reference signs:

- 1: steering system
- 2: motor
- 3: steering gear device
- 4: first steering gear input shaft
- 5: second steering gear input shaft
- 6: steering gear output shaft
- 7: steering gear device housing
- 8: fastening elements
- 9: threaded bore
- 10: mirror plane
- 11: mirror-symmetrical steering system
- 12: transmission gear device
- 13: first spur gear
- 14: output shaft
- 15: second spur gear
- 16: third spur gear
- 17: first helically toothed gear
- 18: second helically toothed gear
- 19: crossed helical gear
- 20: RV gear
- 21: cycloidal gear
- 22: preceding stage
- 23: cycloidal disc
- 24: cycloidal disc
- 25: roller pin
- 26: eccentric shafts
- 27: rolling bearing
- 28: eccentric shaft gear
- 29: further eccentric shaft gear
- 30: external toothing
- 31: central axis of rotation
- 32: further rolling bearing
- 33: rolling bearing
- 34: output shaft bearing receptacle
- 35: steering gear output shaft bearing
- 36: distance
- 37: plane
- 38: plane
- 39: distance
- 40: input section
- 41: middle section
- 42: hollow shaft section
- 43: first rotary angle sensor
- 44: second rotary angle sensor
- 45: input shaft bearing receptacle
- 46: further input shaft bearing receptacle
- 47: steering gear input shaft bearing module
- 48: further steering gear input shaft bearing module
- 49: upper fastening element
- 50: lower fastening element
- 51: central fastening element
- 52: plane
- 53: seal
- 54: internal toothing
- 55: external toothing
- 56: intermediate gear
- 57: drive gear
- 58: first rolling bearing
- 59: second rolling bearing
- 60: first rotary angle sensor
- 61: second rotary angle sensor
- 62: first coding element
- 63: second coding element
- 64: rolling bearing
- 65: worm shaft
- 66: worm wheel
- 67: worm gear
- 68: first helically toothed gear with opposite helix direction
- 69: second helically toothed gear with opposite helix direction
- 70: First preceding stage
- 71: Second preceding stage

## Claims

1. Steering system comprising
a. an electric motor and
b. a steering gear device, which
i. has a first steering gear input shaft that is couplable to a steering shaft and a second steering gear input shaft that is drivably coupled to the electric motor and a steering gear output shaft, wherein
ii. the torque path from the first steering gear input shaft to the steering gear output shaft comprises at least two drivably connected gear stages, and wherein
iii. a first of the gear stages is formed by a cycloidal gear, which has at least one externally toothed cycloidal disc that is in engagement with roller pins arranged along a circumferential circle, wherein movement of the cycloidal disc is generated by a plurality of eccentrically arranged eccentric shafts driven to rotate, each being rotatably supported for rotation about its own axis, **characterized in that**
each eccentric shaft has an eccentric shaft gear which is a component of a second gear stage of the at least two gear stages connected drivably in series.

2. Steering system according to claim 1, **characterized in that**
a. each eccentric shaft gear has a toothing, in particular an external toothing, which is in meshing engagement with the toothing of an intermediate gear, which is also a component of the second gear stage of the at least two gear stages drivably connected in series, or **in that**
b. the intermediate gear is configured as a ring gear which has an internal toothing, in particular with straight teeth, which is in meshing engagement with the toothings of the eccentric shaft gears, which are configured as external toothings.

3. Steering system according to claim 2, **characterized in that** the steering system has at least one of the following features a to k:
a. the intermediate gear comprises an external toothing which is in meshing engagement with the toothings of the eccentric shaft gears,
b. the intermediate gear is additionally a component of a third gear stage,
c. the intermediate gear is additionally a component of a third gear stage and the third gear stage is configured as a worm gear,
d. the intermediate gear, in particular on its outer circumference, comprises a worm gear toothing which is in operative engagement with the worm of the worm gear,
e. the intermediate gear is additionally a component of a third gear stage and the third gear stage is configured as a crossed helical gear,
f. the intermediate gear is additionally a component of a third gear stage and the third gear stage is configured as a crossed helical gear and the crossed helical gear has a first helical gear that meshes with a second helical gear, one of the helical gears being formed by the intermediate gear,
g. the intermediate gear, in particular on its outer circumference, has a helical toothing,
h. the intermediate gear is additionally a component of a third gear stage and the third gear stage is configured as an angular gear,
i. the intermediate gear is additionally a component of a third gear stage and the intermediate gear has a bevel gear toothing,
j. the steering gear input shaft is directly coupled to the third gear stage,
k. the torque path runs from the steering gear input shaft to the third gear stage and from the third gear stage to the second gear stage and from the second gear stage to the first gear stage.

4. Steering system according to one of claims 1 to 3, **characterized in that**
a. each eccentric shaft has a further eccentric shaft gear, or **in that**
b. each eccentric shaft has a further eccentric shaft gear, wherein the eccentric shaft gear and the further eccentric shaft gear of each eccentric shaft are arranged on different sides of the at least one cycloidal disc, or **in that**
c. each eccentric shaft has at least a further eccentric shaft gear, wherein each further eccentric shaft gear is in meshing engagement with a centrally arranged and rotatably mounted drive gear.

5. Steering system according to one of claims 1 to 4, **characterized in that** the steering system has at least one of the following features a to d:
a. the electric motor is coupled to the second steering gear input by means of a transmission gear device,
b. the electric motor is coupled to the second steering gear input by means of a transmission gear device which is configured as a traction mechanism gear or has a traction mechanism gear,
c. the electric motor is coupled to the second steering gear input by means of a transmission gear device the transmission gear device which is configured as a spur gear or has a spur gear,
d. the electric motor is coupled to the second steering gear input by means of a transmission gear device the transmission gear device which is configured as a strain wave gear or has a strain wave gear.

6. Steering system according to one of claims 1 to 5, **characterized in that**
a. the motor is arranged offset, in particular axis-parallel offset, to the steering gear output shaft and/or to the first gear stage, or **in that**
b. the motor is arranged coaxially with the steering gear output shaft and/or with the first gear stage.

7. Steering system according to one of claims 1 to 6, **characterized in that** the steering system has at least one of the following features a to e:
a. the steering gear device has a steering gear device housing which encloses at least the cycloidal gear,
b. the steering gear device has a steering gear device housing which encloses at least one of the further gear stages, in particular all gear stages,
c. the steering gear device has a steering gear device housing which encloses the transmission gear device,
d. the steering gear device has a steering gear device housing which has fastening elements for fastening the steering gear device housing to a higher-level structure, in particular a vehicle body,
e. the steering gear device has a steering gear device housing which is configured such that, with this housing, a steering system that is mirror-symmetrical relative to the steering system with respect to a mirror plane, in particular a vertical mirror plane, at least with regard to the arrangement and orientation of the first and second steering gear input shafts, the steering gear output shaft, and the fastening elements, can be manufactured.

8. Steering system according to one of claims 1 to 7, **characterized in that**
a. the steering system components are configured such that, with these components, a steering system that is mirror-symmetrical to the steering system with respect to a mirror plane, in particular a vertical mirror plane, at least with regard to the arrangement and orientation of the first and second steering gear input shafts, the steering gear output shaft, and the fastening elements, can be manufactured, or **in that**
b. the steering system components are configured such that, with these components, a steering system that is mirror-symmetrical to the steering system with respect to a mirror plane, in particular a vertical mirror plane, at least with regard to the arrangement and orientation of the first and second steering gear input shafts, the steering gear output shaft, and the fastening elements, can be manufactured when all worms, spindles and helical gears are replaced by identical ones having an opposite helix direction.

9. Steering system according to claim 7 or 8, **characterized in that** the steering system has at least one of the following features a to g:
a. the steering gear device housing, in particular in an opening in its housing wall, has at least one input shaft bearing receptacle for a steering gear input shaft bearing,
b. the steering gear device housing has at least one input shaft bearing receptacle for a steering gear input shaft bearing and , in particular in a further opening in its housing wall, has at least one further input shaft bearing receptacle for a steering gear input shaft bearing, which is configured and arranged to be mirror-symmetrical to the input shaft bearing receptacle with respect to a mirror plane, in particular with respect to a horizontal mirror plane,
c. the steering gear device housing, in particular in an opening in its housing wall, has at least one output shaft bearing receptacle for a steering gear output shaft bearing,
d. the steering gear device housing, in particular in an opening in its housing wall, has at least one output shaft bearing receptacle for a steering gear output shaft bearing, wherein the distance between a plane perpendicular to the steering gear output shaft, in which the axis of rotation of the first steering gear input shaft is arranged, and the plane in which the part of the outside of the steering gear device housing that directly surrounds the output shaft bearing receptacle is arranged, is in the range of 70 mm to 90 mm, in particular 80 mm,
e. the steering gear device housing, in particular in a further opening in its housing wall, has at least one further output shaft bearing receptacle for a steering gear output shaft bearing, which is configured and arranged to be mirror-symmetrical to the output shaft bearing receptacle with respect to a mirror plane, in particular with respect to a horizontal mirror plane,
f. a steering gear output shaft bearing is arranged in the further output shaft bearing receptacle,
g. the distance between a plane perpendicular to the steering gear output shaft, in which the axis of rotation of the first steering gear input shaft is arranged, and the plane in which the part of the outside of the steering gear device housing that directly surrounds the further output shaft bearing receptacle is arranged, is in the range of 70 mm to 90 mm, in particular 80 mm.

10. Steering system according to one of claims 1 to 9, **characterized in that** the steering system has at least one of the following features a to e:
a. the axes of rotation of the first steering gear input shaft and the steering gear output shaft are skewed relative to each other,
b. the axes of rotation of the first steering gear input shaft and the steering gear output shaft are arranged in planes perpendicular to each other,
c. the axes of rotation of the first steering gear input shaft and the steering gear output shaft are spaced apart from each other in the range from 80 mm to 100 mm, in particular 90 mm,
d. the cycloidal gear is a component of an RV gear,
e. the steering gear output shaft is directly coupled to the first gear stage.

11. Steering arrangement with a steering system according to one of claims 1 to 10 and with a steering shaft that is operatively connected to a steering handle and coupled to the first steering gear input shaft.

12. Vehicle, in particular commercial vehicle, especially truck or bus, which has a steering system according to one of claims 1 to 10 or a steering arrangement according to claim 11.

13. Gear device, in particular for a steering system according to one of claims 1 to 10 or for a steering arrangement according to claim 11, comprising
a. a cycloidal gear, which has at least one externally toothed cycloidal disc that is in engagement with roller pins arranged along a circumferential circle, wherein movement of the cycloidal disc is generated by a plurality of eccentrically arranged eccentric shafts driven to rotate, each being rotatably supported for rotation about its own axis, each eccentric shaft comprising an eccentric shaft gear and a further eccentric shaft gear, and
b. a first preceding stage directly upstream of the cycloidal gear, wherein the eccentric shaft gears are components of the first preceding stage, and
c. a second preceding stage directly upstream of the cycloidal gear, wherein the further eccentric shaft gears are components of the second preceding stage.

14. Gear device according to claim 13, **characterized in that**
a. each eccentric shaft gear comprises external toothing that is in meshing engagement with the toothing of an intermediate gear which is a component of the preceding stage, or **in that**
b. each eccentric shaft gear comprises external toothing that is in meshing engagement with the toothing of an intermediate gear which is a component of the preceding stage and which is configured as a ring gear which has an internal toothing, in particular with straight teeth, which is in meshing engagement with the external toothing of the eccentric shaft gears, or **in that**
c. each eccentric shaft gear comprises external toothing that is in meshing engagement with the toothing of an intermediate gear which is a component of the preceding stage and which has an external toothing, in particular with straight teeth, which meshes with the external toothing of the eccentric shaft gears.

15. Gear device according to one of claims 13 to 14, **characterized in that**
a. each further eccentric shaft gear is in meshing engagement with a centrally arranged and rotatably mounted drive gear, which is a component of the second preceding stage, or **in that**
b. the eccentric shaft gear and the further eccentric shaft gear of each eccentric shaft are arranged on different sides of the at least one cycloidal disc.
